# EUROPEAN PATENT SPECIFICATION

(11) **EP 0 744 893 B1**
(45) Date of publication and mention of the grant of the patent: **12.04.2000**
(21) Application number: 95910976.0
(22) Date of filing: 13.02.1995
(51) Int. Cl.: A01N 25/22, A01N 63/00

(54) **PESTICIDE ADJUVANT**
PESTIZID ZUSATZ
ADJUVANT DE PESTICIDE

(30) Priority: 17.02.1994 US 198029; 01.02.1995 US 382352
(43) Date of publication of application: 04.12.1996
(73) Proprietor: ABBOTT LABORATORIES, Abbott Park, IL 60064-3500 (US)
(72) Inventor: HOBBS, David, G., Davis, CA 95616 (US)
(74) Representative: Modiano, Guido, Dr.-Ing.
(86) International application number: US9501760
(87) International publication number: WO9522253

(56) References cited:
- EP-A- 0 250 751
- WO-A-92/19102
- FR-A- 2 312 195
- SU-A- 1 678 802
- US-A- 3 393 990
- US-A- 3 619 222
- PATENT ABSTRACTS OF JAPAN vol. 11 no. 349 (C-456) ,14 November 1987 & JP,A,62 120301 (HOKKO CHEM IND) 1 June 1987,
- CHEMICAL ABSTRACTS, vol. 79, no. 21, 26 November 1973 Columbus, Ohio, US; abstract no. 122557, & JP,A,48 005 936 (KUMIAI CHEMICAL INDUSTRY) 25 January 1973
- DATABASE WPI Week 7820 Derwent Publications Ltd., London, GB; AN 78-35830A [20] & JP,A,53 037 750 (NAKAJIMA) , 7 April 1978

## Description

### Field of the Invention

The present invention relates to formulations for pesticides, particularly biopesticides. More specifically, the invention relates to formulations which enhance the pesticidal activity of the pesticides with which they are applied.

### Background of the Invention

Throughout most of recorded history, insect pests have plagued man's attempts at cultivation of food and other valuable crops. Insects are responsible for billions of dollars in crop damage each year. A large measure of control of this destruction has been possible through the use of synthetic chemical pesticides; however, the potential damage to the environment, including risks to both humans and beneficial insects, resulting from the use of many of these chemicals, has stimulated further interest in development of more natural means of controlling destructive insects.

A "second generation" of insecticidal products has appeared in the form of biopesticides. Such pesticides typically utilize, as an active ingredient, a naturally occurring agent or substance which has inherent biocidal properties. In many cases, such agents are selectively toxic for certain types of insects, meaning that beneficial insects and other animals are unaffected by the agent's toxic properties. Examples of useful natural products are entomopathogens, such as insect viruses like nuclear polyhedrosis viruses (NPV). Also helpful are insect specific toxins, such as the endotoxins produced by the bacterium *Bacillus thuringiensis*, or various types of spider venoms.

Although these biopesticides avoid many of the problems attendant upon use of chemical pesticides, the use of these products is not problem-free. Some of the very properties that make these pesticides environmentally desirable also contribute to the difficulties arising with their use. As natural biological products, many biopesticides may be highly susceptible to the detrimental effects of nature, such as sun damage, dehydration, temperature extremes and degradation. Although these products may be formulated with additional components which protect the active agent from these effects, consideration must also be given to keeping the formulation as a whole palatable to the target insect, since, in the majority of cases, an agent that is not consumed by the insect will obviously be ineffective, no matter how potent the insecticidal active agent. A particularly desirable formulation would be one which not only is palatable, but also actually stimulates insect feeding. Achieving the necessary balance among all these important factors has to date proven to be an extremely difficult, if not impossible task. However, the present invention now provides a formulation which not only adequately protects the active agent incorporated therein, but also is palatable to insects, possibly enhancing insect feeding, and therefore results in increased efficacy relative to standard formulations previously available.

### Summary of the Invention

The present invention relates to an adjuvant formulation for delivery of biopesticides. The formulation comprises effective amounts of a lignin or lignin derivative, combined with effective amounts of one or more sugar alcohols. Although lignin has previously been used in insecticide formulations as a dispersant (Lignosulfonates for Agricultural Chemicals, Product Brochure, Lignotech USA, Greenwich, CT), and has also been recognized as having UV protective properties (Podgewaite and Shapiro, in Samson, Vlak and Peters [eds.], Proceedings, Fundamental and Applied Aspects of Invertebrate Pathology. Foundation of the Fourth International Colloquium of Invertebrate Pathology. Wageningen, The Netherlands, 1986), it has now been surprisingly discovered that the combination of lignin and a sugar alcohol is synergistic, providing a greater level of UV protection, resulting in increased mortality, than either component does alone, or than would be predicted from a combination of the individual effects of each component.

In a preferred embodiment, the formulation is mixed with an effective amount of a pesticide, e.g., insecticide, herbicide, fungicide, acaricide, or combinations thereof. Most preferably the pesticide is a biopesticide, such as an entomopathogenic virus or fungus or *Bacillus thuringiensis*, or spores, toxin crystals, or a recombinantly expressed toxin therefrom. The formulation provides a particularly effective delivery vehicle for pesticides, allowing for a longer residence time for the pesticide on the treated plant. In addition, the formulation appears to be quite palatable to the insects, and may even function as a feeding stimulant to the target insect, thereby resulting in more feeding and higher levels of ingestion of the pesticide, and therefore greater efficacy of the pesticide applied in the formulation. The formulation is particularly well adapted for use with pesticides intended for treatment of coleopteran and lepidopteran insect pests, and under field conditions, significantly outperforms standard formulations currently in use.

### Detailed Description of the Invention

The formulation claimed herein functions not only as an adjuvant, but also as a diluent and carrier for the pesticide to be delivered. Each component of the formulation mix can contribute to one or more of the various functions achieved by the formulation. However, an important goal of the formulation is to protect the biocidal properties of the active component from sun, or UV damage. A particularly useful UV protectant is lignin, a readily available by-product of the pulp and paper industry. In the present specification and claims, "lignin" is understood to mean any derivative of lignin such as lignosulfonates and salts thereof (e.g., Na, K, Ca and Mg salts), oxylignins and salts thereof, lignin liquors, Kraft lignins and derivatives thereof, and low and high molecular weight lignins. The UV protectant properties of lignin have previously been described, but it has now been unexpectedly discovered that its efficacy can be significantly enhanced by its combination with a sugar alcohol. The sugar alcohol itself appears to have little or no UV protectant properties, as is shown in Table 1. However, as also shown in Table 1, its presence in the formulation with lignin more than doubles the UV protectant properties of the lignin. Thus, there is a synergistic interaction between these two components which provides the necessary UV protection, further resulting in enhanced mortality due at least in part to greater retention of biological activity of the active component. Even small quantities of lignin will provide some UV protection in the presence of a sugar alcohol. As used in the present specification and claims, "effective amount" of lignin refers to an amount which when combined with an effective amount of sugar alcohol,under normal sun conditions, increases the UV protection of the formulation at least 25%, preferably at least 50%, relative to the protection provided by lignin alone in the same formulation. Amounts of lignin in the formulation range from at least about 2% w/w up to about 95% w/w, preferably at least about 5-10%, most preferably at least about 10-15% w/w, up to about 50% w/w.

The sugar alcohols in the present formulation have the formula CH₂OH(CHOH)ₙCH₂OH, wherein n is an integer from 2 to 5. Among the sugar alcohols useful for this purpose are sorbitol, mannitol and xylitol. An "effective amount" of a sugar alcohol in the formulation is that amount which, in combination with a given amount of lignin, will enhance the UV protective properties of lignin at least 25%, and most preferably at least 50%, relative to lignin alone in the same formulation. A preferred concentration of the sugar alcohol in the formulation is at least about 4% w/w, up to about 95%, and most preferably is at least about 8% w/w, up to about 35%.

In order to achieve maximum efficacy, the formulation containing a pesticide must first be deposited directly on the plants to be treated, and then must adhere to and remain active on the surface to the plant to which it is applied. The product must also be palatable to the target insect, or it will not be effectively consumed. To achieve these goals, the UV protecting components may be supplemented with other components which may perform one or more of these functions. Therefore, in a preferred embodiment, the formulation also comprises at least one agent which is capable of enhancing deposition (hereinafter, "deposition agent" of the formulation, i.e., a component which will assist in keeping it from drifting from the target area as it is being applied (e.g., as it is sprayed from a plane), or from being blown away from the plant once it has been deposited. The deposition agent thus should be a component which has sufficient density to prevent random dispersal. A preferred deposition agent in the present invention is a proteinaceous material, which has the added benefit of being palatable to the insect as well. Any animal or vegetable protein is suitable for this purpose, in dry or in liquid form. Examples of useful sources of protein which can be conveniently and economically added to the formulation are soy protein, potato protein, soy flour, potato flour, fish meal, bone meal, yeast extract, blood meal and the like. However, protein is not the only material which can be used in this manner. Alternative deposition agents include modified cellulose (e.g., carboxymethylcellulose), botanicals (e.g., grain flours, ground plant parts), natural earths (talc, vermiticulite, diatomaceous earth), natural clays (e.g., attapulgite, bentonite, kaolinite, montmorillonite), or synthetic (e.g., Laponite). When utilized, the deposition agent preferably constitutes at least about 1%,w/w up to about 50% w/w, more preferably at least about 2% up to about 20%.

Retention of the formulation can be aided by inclusion of an adherent component. To this end, one or more polyhydric alcohols are added to the formulation. This component can serve a number of functions. First, it functions as an adherent which permits the formulation to stick to the plant surface. In addition, these components serve as a humectant, to attract moisture to the composition *in situ*. Such components also can be useful in preventing freezing of the formulation, thereby protecting the activity of the pesticidal component. The alcohol component can be chosen from one or more of the following: ethylene glycol, propylene glycol, dipropylene glycol, glycerol, butylene glycols, pentylene glycols, hexylene glycols; the sugar alcohol component may also contribute to this function, but it is desirable to add a second polyhydric alcohol to the formulation. Overall, the second polyhydric alcohol component of the formulation, if present, should comprise from about 1 to about 20% w/w of the total composition.

Other optional components may also be added to the formulation. Optional components may comprise preservatives such as 1,2-benisothiazolin-3-one, parabens, sorbates, or benzoates and surface active agents such as emulsifying or dispersing agents. Suitable anionic surface-active agents include, but are not limited to carboxylates, mono- or diesters of phosphoric acid with fatty alcohol ethoxylates or salts of same; and fatty alcohol sulphates. Nonionic agents include, but are not limited to condensation products of fatty acid esters, fatty alcohols, fatty acid amides or fatty-alkyl or alkenyl-substituted phenols with ethylene oxide. Cationic agents include but are not limited to aliphatic mono-, di-, or polyamine such as an acetate, naphthenate or oleate, or an oxygen-containing amine such as an amine oxide of polyoxyethylene alkylamine. It will be understood by those skilled in the art that such optional components are not essential to the activity of the formulation, and therefore their proportions are not critical, and may be determined by the skilled artisan as a matter of optimization for the purpose and method of application intended.

The present formulation may be used in application of any pesticide, e.g., insecticide, herbicide, fungicide, acaricide, or combinations thereof, but is particularly useful for application of pesticides which are expected to perform better when protected from UV radiation, and/or which encounters problems with deposition or retention on the target area (e.g., being easily blown away). It is particularly beneficial to combine the adjuvant formulation with biopesticides, such as those based on entomopathogenic viruses or fungi, or those based on insect-specific bacterial toxins, such as *Bacillus thuringiensis* (Bt) endotoxins (including spores and bacteria containing the endotoxin, as well as the toxin *per se*). Examples of biopesticides include but are not limited to baculoviruses, such as nuclear polyhedrosis virus (NPV), e.g. *Autographa californica* NPV,*Syngrapha falcifera* NPV, *Heliothis zea* NPV, *Lymantria dispar* NPV, *Spodoptera exigua* NPV, *Neodiprion lecontei* NPV, *Neodiprion sertifer* NPV, *Harrisina brillians* NPV, *Endopiza viteana* Clemens NPV; granulosis viruses e.g., *Cydia pomonella* granulosis virus (GV), *Pieris brassicae* GV, *Pieris rapae* GV; entomopathogenic fungi, such as *Beauveria bassiana*, *Metarhizium anisopliae*, *Verticillium lecanii*, and *Paecilomyces* spp. and various *Bacillus*-based products. Examples of *Bacillus*-related pesticides include but are not limited to pesticides produced by *Bacillus thuringiensis* subsp. *kurstaki*, *Bacillus thuringiensis* subsp. *aizawai*, *Bacillus thuringiensis* subsp. *israelensis*, *Bacillus thuringiensis* subsp.*tenebrionis*, *Bacillus sphaericus*, *Bacillus thuringiensis kurstaki/tenebrionis*, *Bacillus* *thuringiensis aizawai/ kurstaki*, and *Bacillus thuringiensis kurstaki/kurstaki*.

The present formulation may also be useful in application of chemical pesticides, which can also be detrimentally affected by UV degradation and deposition problems. It is therefore contemplated that the present formulations be combined with pesticides such as organophosphates, pyrazoles, pyrethroids, pyroles, inorganic fluorine, insect growth regulators, avermectins, and carbamates.

The inert formulation is combined with the active component in an amount determined by the approved application rate of the pesticide and the desired mode of application. The formulation may be applied in dry or liquid form. If the inert formulation is adjusted with diluent, it is preferably water, up to about 80% w/w. The active component can be added either before or after the addition of diluent. As noted, the concentrations of each component will vary depending on the pesticide and mode of application, but typically, the applied formulation will contain up to about 99% inert carrier, and up to about 30% active component.

Compositions comprising the pesticide and the adjuvant formulation can be applied directly to the plant by, for example, spraying or dusting at the time of first appearance of the pest, or as a preventative measure prior to pest appearance. A preferred method of application is hydraulic spray systems.

The pesticidal composition can be applied to protect a number of different plant types, including, but not limited to, cereal crops, such as wheat, barley, rye, oats, rice, sorghum, or millet; beets (sugar and fodder beets); drupes, pomes and soft fruits such as apples, pears, plums, peaches, almonds, cherries, strawberries, raspberries, and blackberries; legumes, such as peas, beans, lentils, and soybeans; oil plants, such as rape, mustard, poppy, olive, sunflower, coconuts, castor bean, cacao, and peanut; cucurbits, such as cucumber, squashes and melons; citrus fruits, such as lemons, oranges, and grapefruits; vegetables such as spinach, lettuce, asparagus, *Brassica* species, carrots, onions, tomatoes, potatoes, and peppers; lauraceae, such as avocado, cinnamon and camphor; deciduous trees and conifers, such as linden, yew, oak, alder, poplar, birch, larch, pine, and firs; and other plants, such as tobacco, corn, nuts, coffee, tea, sugar cane, vines, hops, bananas, rubber and ornamentals.

The formulations of the present invention can be used in the treatment or prevention of infestations of a number of different insect types. It is particularly preferred to use the formulation in eliminating pests of the order Lepidoptera, e.g., *Achroia grisella, Acleris gloverana, Acleris variana, Adoxophyes orana, Agrotis ipsilon, Alabama argillacea, Alsophila pometaria, Amyelois transitella, Anagasta kuehniella, Anarsia lineatella, Anisota senatoria, Antheraea pernyi, Anticarsia gemmatalis, Archips sp., Argyrotaenia sp., Athetis mindara, Bombyx mori, Bucculatrix thurberiella, Cadra cautella, Choristoneura sp., Cochylls hospes, Colias eurytheme, Corcyra cephalonica, Cydia latiferreanus, Cydia pomonella, Datana integerrima, Dendrolimus sibericus, Desmia funeralis, Diaphania hyalinata, Diaphania nitidalis, Diatraea grandiosella, Diatraea saccharalis, Ennomos subsignaria, Eoreuma loftini, Ephestia elutella, Erannis tilaria, Estigmene acrea, Eulia salubricola, Eupocoellia arabiguella, Eupoecilia ambiguella,* *Euproctis chrysorrhoea, Euxoa messoria, Galleria mellonella, Grapholita molesta, Harrisina americana, Helicoverpa subflexa, Helicoverpa zea, Heliothis virescens, Hemileuca oliviae, Homoeosoma electellum, Hyphantria cunea, Keiferia lycopersicella, Lambdina fiscellaria fiscellaria, Lambdina fiscellaria lugubrosa, Leucoma salicis, Lobesia botrana, Loxostege sticticalis, Lymantria dispar, Macalla thyrsisalis, Malacosoma sp., Mamestra brassicae, Mamestra conifigurata, Manduca quinquemaculata, Manduca sexta, Maruca testulalis, Melanchra picta, Operophtera brumata, Orgyia sp., Ostrinia nubilalis, Paleacrita vernata, Papilio cresphontes, Pectinophora gossypiella, Phryganidia californica, Phyllonorycter blancardella, Pieris napi, Pieris rapae, Plathypena scabra, Platynota flouendana, Platynota stultana, Platyptilia carduidactyla, Plodia interpunctella, Plutella xylostella, Pontia protodice, Pseudaletia unipuncta, Pseudoplasia includens, Sabulodes aegrotata, Schizura concinna, Sitotroga cerealella, Spilonota ocellana, Spodoptera sp., Thaurnstopoea pityocampa, Tineola bisselliella, Trichoplusia ni, Udea rubigalis, Xylomyges curialis, Yponomeuta padella;* Diptera, e.g. *Aedes sp., Andes vittatus, Anastrepha ludens, Anastrepha suspensa, Anopheles barberi, Anopheles quadrimaculatus, Armigeres subalbatus, Calliphora stygia, Calliphora vicina, Ceratitis capitata, Chironomus tentans, Chrysomya rufifacies, Cochliomyia macellaria, Culex sp., Culiseta inornata, Dacus oleae, Delia antigua, Delia platura, Delia radicum, Drosophila melanogaster, Eupeodes corollae, Glossina austeni, Glossina brevipalpis, Glossina fuscipes, Glossina morsitans centralis, Glossina moristans morsitans, Glossina moristans submorsitans, Glossina pallidipes, Glossina palpalis gambiensis, Glossina palpalis* *palpalis, Glossina tachinoides, Haemagogus equinus, Haematobius irritans, Hypoderma bovis, Hydoderma lineatum, Leucopis ninae, Lucilia cuprina, Lucilia sericata, Lutzomyia longlpaipis, Lutzomyia shannoni, Lycoriella mali, Mayetiola destructor, Musca autumnalis, Musca domestica, Neobellieria sp., Nephrotoma suturalis, Ophyra aenescens, Phaenicia sericata, Phlebotomus sp., Phormia regina, Sabethes cyaneus, Sarcophaga bullata, Scatophaga stercoraria, Stomaxys calcitrans, Toxorhynchites amboinensis, Tripteroides bambusa;* Coleoptera, e.g. *Leptinotarsa sp., Acanthoscelides obtectus, Callosobruchus chinensis, Epilachna varivestis, Pyrrhalta luteola, Cylas formicarius elegantulus, Listronotus oregonensis, Sitophilus sp., Cyclocephala borealis, Cyclocephala immaculata, Macrodactylus subspinosus, Popillla japonica, Rhizotrogus majalis, Alphitoblus diaperinus, Palorus ratzeburgi, Tenebrio molitor, Tenebrio obscurus, Tribolium castaneum, Tribolium confusum, Tribolius destructor;* Acari, e.g., *Oligonychus pratensis, Panonychus ulmi, Tetranychus urticae; Hymenoptera,* e.g., *Iridomyrmex humilis, Solenopsis invicta;* Isoptera, e.g., *Reticulitermes hesperus, Reticulitermes flavipes, Coptotermes formosanus, Zootermopsis angusticollis, Neotermes connexus, Incisitermes minor, Incisitermes immigrans;* Siphonaptera, e.g., *Ceratophyllus gallinae, Ceratophyllus niger, Nosopsyllus fasciatus, Leptopsylla segnis, Ctenocephalldes canis, Ctenocephalldes felis, Echicnophaga gallinacea, Pulex irritans, Xenopsylla cheopis, Xenopsylla vexabilis, Tunga penetrans;* Tylenchida, e.g., *Melodidogyne incognita, Pratylenchus penetrans*.

The invention is further illustrated in the following non-limiting examples.

### EXAMPLES

### 1.Preparation of Formulation

The adjuvant formulation is prepared with the following components:

| Component | Parts |
|---|---|
| Crude lignosulfate(Orzan™LS) | 15 |
| (mixed in water) | 22.5 |
| propylene glycol(Ashland Chemical) | 7 |
| 70% sorbitol solution(ICI Americas Inc) | 12 |
| polyacrylic acid, sodium salt (Colloid 211, Rhone Poulenc Inc.) | 3 |
| emulsified soy lecithin (CENTROMIX™E, Central Soya Inc.) | 8 |
| preservative (1,2-benzisothiazolin-3-one) | 0.2 |
| Soy Con.4950 powder (Danpro™ A) | 10 |
| water | 22.3 |

The components are mixed continuously to produce a homogeneous product.

### 2.Preparation of an insecticidal composition

A series of carrier formulations are prepared in which one of the components as stated above is eliminated from the mixture, to determine each components effect on performance. Samples 012-258-1,and 4-8 are prepared using a 40% w/w stock solution of lignosulfonate powder (ORZAN LS; Georgia Pacific, Seattle) dissolved in water. The formulation ingredients are added to the lignosulfonate solution, with agitation (standard lab stirrer), in the following order; propylene glycol, sorbitol (70%), centromix E, Colloid 211D, Soy 4950 and water. The mixture is then pH adjusted to 6.0 to 6.7 with sodium hydroxide solution and the preservative added last.

Sample 012-258-2 is formulated in a similar fashion to 012-258-1 and 4-8, except the starting material is Norlig 24C, a pre-manufactured solution of lignosulfonate (Booregaard, Norway).

Sample 012-262-1 is prepared by blending Centromix F (a dry soy lecithin), diatomateous earth, silica and soy 4950 together and milling them through a 0.5mm Retsch Mill screen. A dry form of 90% sorbitol (Neosorb Sorbitol) is milled separately through the same mill and then all ingredients are dry blended together, including the Lignosol SFX-65 (Lignotech USA, a member of the Borregaard Group ) and Colloid 211D. This powder is used as a carrier concentrate that is let down in 60 to 70% water to give a 30 to 40% solids product. The active ingredient may be added before or after the water addition.

Samples 502591, 502611, 502731, and 502771 are prepared similarly to 012-258-1 and 4-8, but with a 45% lignosulfonate solution (0RZAN S), and with adjustment to pH 6.5 prior to addition of preservative. Additionally, the protein source is varied in each: 502591 contains CVP 50 (soy protein), 502611 contains soy concentrate 4950, 502731 contains cotton seed flour, and 502771 contains lysamine (potato protein).

GYPCHEK™ polyhedrosis virus is blended into the formulations at a rate of 6.5 x 10⁸ occlusion bodies (OB)/ml. The formulations are then applied to a water soluble film using a BEECO atomizer 10 to 30 feet above the film, at a two gallon per acre equivalent rate, at 7000 revolutions per minute. The droplet deposits are quite uniform.

The coated film is then irradiated with a bank of artificial sunlamps and identical size swatches of film are sampled at the 0, 5, 15, and 30 minute time periods. For samples 502591, 502611, 502731, and 502771, the sampling is extended to 45 minutes. The swatches are each solubilized into the a standard gypsy moth diet preparation and the diet is then divided into five equal portions. Ten gypsy moth larvae are then placed on each of the five diet samples and allowed to feed in a controlled environment. Mortality is recorded over a fourteen day period and expressed as a percentage of the Original Activity Remaining (%OAR) after 30 minutes of UV treatment. A summary of the formulations tested and the results observed are presented in Table 1.

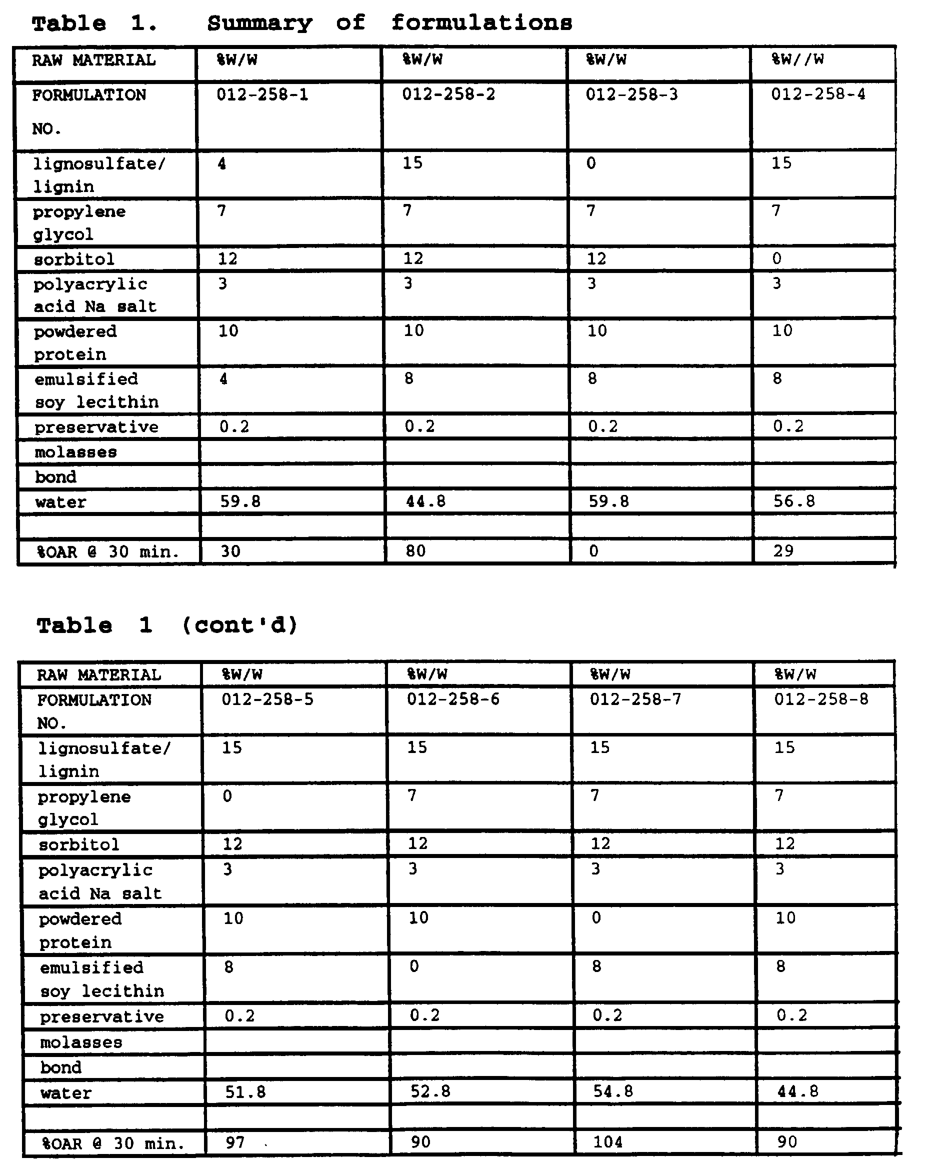

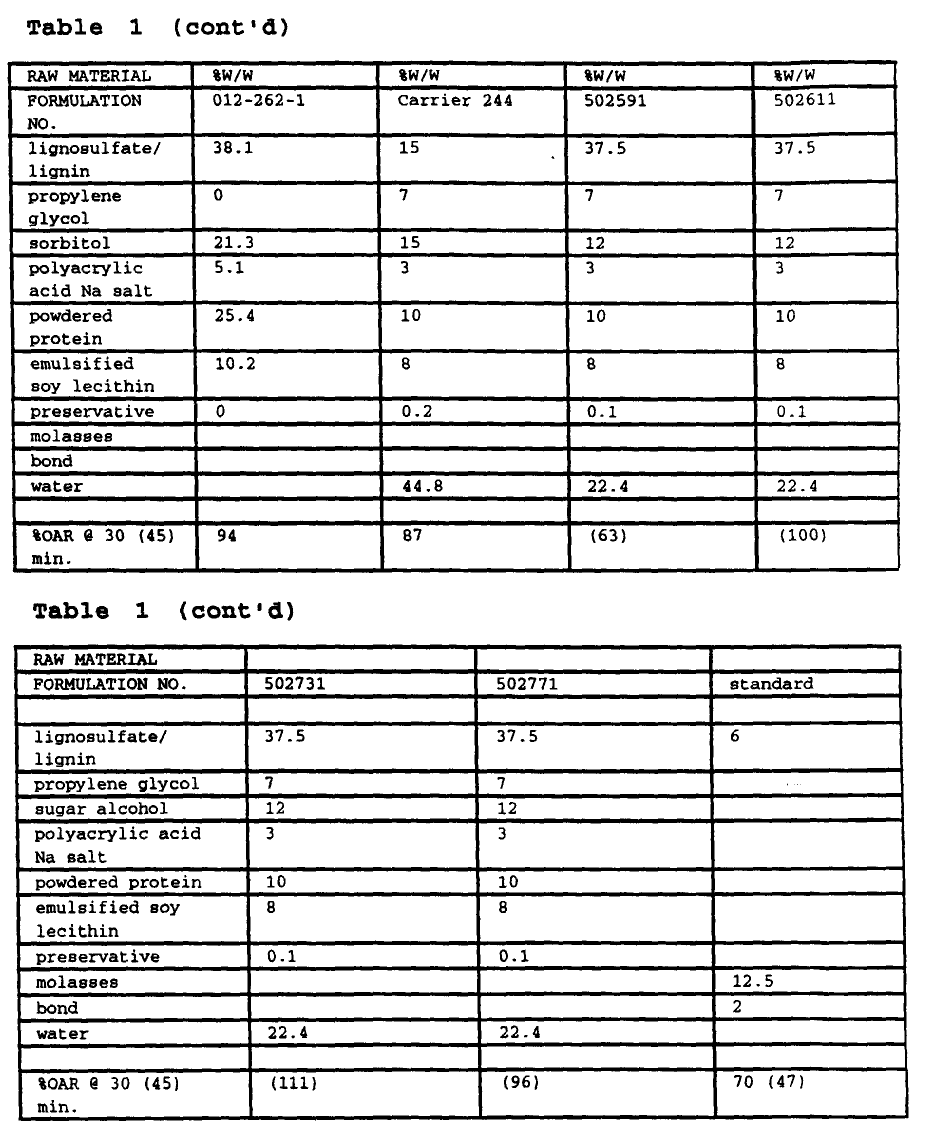

### Discussion

The data in Table 1 show that the composition is highly dependent on the UV absorbing activity of lignin, but almost equally so on the sugar alcohol content. When either is removed from the formulation, the protection drops drastically, but neither one by itself give protection equal to the combination of the two. The protection is synergistic, raising the total protection to levels greater than the sum of the individuals.

Samples 258-5,6 and 7 suggest that the omission of the polyhydric alcohol propylene glycol, the surfactant lecithin, or protein does not alter the formulation's ability to inhibit degradation by UV light. Nonetheless, these components still make a contribution to the overall utility of the formulation, since, in addition to resistance to UV degradation, other useful properties of an insecticidal formualtion are the ability to fall from the application equipment without too much evaporation, to stick to the leaves, to be ingested by the target pest, and deliver the active ingredient to the pest's gut.

### 3. Application of insecticidal composition

Natural woodlot plots are chosen to conduct a field test on Carrier 244 combined with GYPCHEK™, using aircraft with spray applicators.

Six subplots are treated with a tank mix containing Carrier 244 (92%) and a water-GYPCHEK™ slurry (8%). Two applications are made each at 1.25 x 10¹² OB in 9.4 l/ha and another six plots are treated with a lower concentration of virus, 5 x10¹¹ OB in 9.4 l/ha. Six plots are treated with "standard^{"} formulation at 1.25 x 10¹² OB in 18.6 l/ha, and six are nontreated. Applications are three days apart when the majority of larvae are in the early second instar. Early evaluation of pre- and post-treatment larval mortality shows a significant effect of both the high and low dosage formulations (83 and 80%, respectively). These results differ significantly (P≤0.05) from results observed with both the standard(71%) and control(29%). Defoliation estimates for the high and low treatment (11 and 12%, respectively) are not statistically different from the standard treatment (16%), but are significantly different from the control (33%).

### 4. Preparation of Additional Virus Adjuvant Formulations

The adjuvant formulations are prepared using a 40% w/w stock solution of lignosulfonate powder dissolved in water comprising either ULTRAZINE™ NA (∼80% lignosulfonate; Lignotech USA, Houston, Texas), UFOXANE™ 3A (∼90% lignosulfonate; Lignotech USA, Houston, Texas), or REAX™ 88B (∼90% lignosulfonate; Westvaco, Charleston Heights, South Carolina). NORLIG™ 24C (∼35% lignosulfonate; Lignotech USA, Houston, Texas) which is an aqueous solution of lignosufonate is used as supplied. The formulation ingredients are added to the lignosulfonate solution, with agitation (standard lab stirrer), in the following order: propylene glycol (Ashland Chemical, Columbus, Ohio), sorbitol (70%, ICI Americas, Inc., Wilmington, Delaware), emulsified soy lecithin (CENTROMIX™ E, Central Soya, Inc., Fort Wayne, Indiana), sodium salt of polyacrylic acid, sodium salt (COLLOID™ 211D, Rhone Poulenc, Inc., Charleston, South Carolina), soy protein (PROFINE™ VF, Central Soya, Inc., Fort Wayne, Indiana), modified corn starch (MIRAGEL™ 463, A.E. Staley Co., Decatur, Illinois), and water. The mixture is then pH adjusted to 6.0 to 6.7 with sodium hydroxide solution and the preservative, 1,2-benzisothiazolin-3-one (PROXEL™ GXL, Zeneca, Wilmington, Delaware) is added last. The standard formulation comprised of molasses and lignosulfonate (ORZAN LS, ∼80% lignosultonate) is also prepared as described in EXAMPLE 1. The composition of each adjuvant formulation in % w/w is summarized in Tables 2A and 2B.

**Table 2A**

| Virus Adjuvant Formulations | | | | | | | | | | |
|---|---|---|---|---|---|---|---|---|---|---|
| | STANDARD | 134-12-1 | 134-12-3 | 134-12-4 | 134-12-7 | 134-12-8 | 134-12-10 | 134-12-11 | 134-20-1 | 134 25-1 |
| COMPONENT | | | | | | | | | | |
| NORLIG™ 24C | | 41.2 | | | 41.2 | 41.2 | | | | |
| ULTRAZINE™ NA | | | 18.7 | | | | | | | |
| UFOXANE™3A | | | | 18.7 | | | | | | 20 |
| REAX™88B | | | | | | | 12.5 | 12.5 | 10 | |
| ORZAN™ LS | 10 | | | | | | | | | |
| ASCORBIC ACID | | | | | | | | | | |
| WATER | 63 | 31.1 | 53.7 | 53.7 | 37.5 | 18.7 | 57.4 | 51.2 | 60.9 | 56.8 |
| CORN STARCH | | | | | | | 2.5 | 2.5 | 2 | 3 |
| PROFINE ™VF | | | | | | | | 6.2 | 5 | |
| 70% SORBITOL | | 12.5 | 12.5 | 12.5 | 6.2 | 25 | 12.5 | 12.5 | 10 | 8 |
| PROPYLENE GLYCOL | | 7.5 | 7.5 | 7.5 | 7.5 | 7.5 | 7.5 | 7.5 | 6 | 6 |
| SOY LECITHIN | | 7.5 | 7.5 | 7.5 | 7.5 | 7.5 | 7.5 | 7.5 | 6 | 6 |
| PROXEL™ GXL | | 0.2 | 0.1 | 0.1 | 0.1 | 0.1 | 0.1 | 0.1 | 0.1 | 0.2 |
| MOLASSES | 25 | | | | | | | | | |
| STICKER | 2 | | | | | | | | | |
| | | | | | | | | | | |
| % w/w LIGNIN | 8 | 14.4 | 15 | 16.8 | 14.4 | 14.4 | 11.3 | 11.3 | 9 | 18 |
| % w/w SORBITOL | 0 | 8.8 | 8.8 | 8.8 | 4.3 | 17.5 | 8.8 | 8.8 | 7 | 5.6 |

**Table 2B**

| Virus Adjuvant Formulations | | | | | | | | | | |
|---|---|---|---|---|---|---|---|---|---|---|
| | STANDARD | 134-25-2 | 134-25-6 | 134-25-7 | 134-25-8 | 134-25-10 | 134-25-11 | 134-25-12 | 134-25-13 | 134-25-14 |
| COMPONENT | | | | | | | | | | |
| NORLIG™ 24C | | | 40 | 30 | 15 | 15 | 15 | | | |
| ULTRAZINE™ NA | | | | | | | | | | |
| UPOXANE™ 3A | | 10 | | | | | | | | |
| REAX 88B | | | | | | | | 5 | 5 | 5 |
| ORZAN LS | 10 | | | | | | | | | |
| ASCORBIC ACID | | | | | | 2 | | | | 1 |
| WATER | 63 | 66.8 | 38.8 | 48.8 | 63.8 | 61.8 | 72.3 | 82.3 | 77.3 | 81.3 |
| CORN STARCH | | 3 | 3 | 3 | 3 | 3 | 2.5 | 2.5 | 2.5 | 2.5 |
| PROFINE™ VF | | | | | | | | | 5 | |
| 70% SORBITOL | | 8 | 6 | 6 | 6 | 6 | 6 | 6 | 6 | 6 |
| PROPYLENE GLYCOL | | 6 | 6 | 6 | 6 | 6 | 4 | 4 | 4 | 4 |
| SOY LECITHIN | | 6 | 6 | 6 | 6 | 6 | | | | |
| PROXEL GXL | | 0.2 | 0.2 | 0.2 | 0.2 | 0.2 | 0.2 | 0.2 | 0.2 | 0.2 |
| MOLASSES | 25 | | | | | | | | | |
| STICKER | 2 | | | | | | | | | |
| | | | | | | | | | | |
| % w/w LIGNIN | 8 | 9.0 | 14 | 10.5 | 5.3 | 5.3 | 5.3 | 4.5 | 4.5 | 4.5 |
| % w/w SORBITOL | 0 | 5.6 | 4.2 | 4.2 | 4.2 | 4.2 | 4.2 | 4.2 | 4.2 | 4.2 |

### 5: Evaluation of Additional Adjuvant Formulation with GYPCHEK™ against Gypsy Moth

GYPCHEK™ is blended with the adjuvant formulations described in Example 4 and evaluated using the same procedures as described in Example 2 except the coated film is irradiated up to 45 minutes with samples being taken at 5 minutes and 15 minute intervals up to 45 minutes.

A summary of the formulations tested and the results observed are presented in Table 3. The results show that all the formulations have better UV protectant properties as compared to the lignin-molasses standard formulation, except formulations 134-25-8, 134-25-10, 134-25-11, 134-25-12 and 134-25-14 with final lignin and sorbitol concentrations in the range of about 4% and about 5%, which are below the optimum for UV protection. A purified lignosulfonate, UFOXANE™ 3A, is more effective than crude lignosulfonates. For ease of mixing, the optimum lignin concentration is in the range of between about 8% and about 30% w/w, preferably in the range of between about 8% and about 20% w/w, although for efficacy, concentrations can be higher. Also, the optimum sorbitol content is in the range of between about 4% and about 35%, preferably in the range of between about 8% and about 20% w/w. Furthermore, the incorporation of a protein, such as PROFINE™ VF, improves the effectiveness of lignin and sorbitol as a UV protectant as demonstrated with formulations 134-12-11 and 134-25-13.

**Table 3**

| Percent Original Activity Remaining (%OAR) | | | | |
|---|---|---|---|---|
| | %OAR @ 5 min. | %OAR @ 15 min. | %OAR @ 30 min. | %OAR @ 45 min. |
| FORMULATION | | | | |
| Standard | 36 | 15 | 15 | 23 |
| 134-12-1 | 77 | 37 | 49 | 65 |
| 134-12-3 | 94 | 78 | 73 | 65 |
| 134-12-4 | 88 | 74 | 76 | 79 |
| 134-12-6 | 72 | 87 | 60 | 55 |
| 134-12-7 | 59 | 87 | 72 | 79 |
| 134-12-8 | 67 | 78 | 57 | 52 |
| 134-12-10 | 67 | 59 | 57 | 63 |
| 134-12-11 | 100 | 100 | 102 | 104 |
| 134-20-1 | 83 | 70 | 87 | 87 |
| 134-25-1 | 86 | 81 | 100 | 97 |
| 134-25-2 | 57 | 32 | 32 | 35 |
| 134-25-6 | 82 | 82 | 65 | 26 |
| 134-25-7 | 69 | 57 | 49 | 20 |
| 134-25-8 | 27 | 16 | 16 | 11 |
| 134-25-10 | 38 | 21 | 25 | 16 |
| 134-25-11 | 33 | 14 | 24 | 4 |
| 134-25-12 | 48 | 36 | 28 | 33 |
| 134-25-13 | 83 | 73 | 57 | 40 |
| 134-25-14 | 53 | 27 | 20 | 13 |

### 6. Preparation of Adjuvant Formulation for Bacillus thuringiensis

The adjuvant formulations are prepared as described in Example 1 with the compositions in % w/w as described in Table 4.

**Table 4**

| *Bacillus thuringiensis* Adjuvant Formulations | | | |
|---|---|---|---|
| | | 130-18-1 | 130-18-2 |
| COMPONENT | | % w/w | % w/w |
| ORZAN™ LS | | 15.38 | 14.97 |
| PROPYLENE GLYCOL | | 5.13 | 4.99 |
| 70% SORBITOL | | 16.4 | 15.97 |
| PROFINE™ VF | | 3.84 | 3.74 |
| PROXEL™ XL | | 0.2 | 0.2 |
| WATER | | 50.95 | 48.35 |

### 7. Field Evaluation of Adjuvant Formulation with Bacillus thuringiensis

BIOBIT™ primary powder (*Bacillus thuringiensis* subsp. *kurstaki*; obtained from NOVO NORDISK A/S, Bagsværd, Denmark) is mixed with the adjuvant formulations described in Example 6 to a level of 8.1% w/w for 130-18-1 and 11.78% w/w for 130-1-2. The potency is determined to be 32 BIU (Billion International Units) per gallon for 130-18-1 and 48 BIU per gallon for 130-18-2. The formulations are applied neat with a Micronaire AU7100 Atomizer at rates in gallons per acre as described in Table 5 to four randomized plots of sugar beets (two 50 foot long rows per plot). BIOBIT™ FC and FORAY 32B (*Bacillus thuringiensis* subsp. *kurstaki*; obtained from NOVO NORDISK A/S, Bagsværd, Denmark) are applied with a conventional system involving a 8004 flat fan hydraulic nozzle applying 20 gallons tank mix per acre. The rate of application in BIU per acre for each formulation is shown in Table 5.

A total of 36 deposit cards (2.5 x 7.5 cm) are placed in each plot and after application as described above are analyzed for droplet density (drops per sq. cm.), mean volume diameter (MVD), and percent average coverage (percent of total deposit card surface). Percent mortality is determined against *Spodoptera exigua*. Specifically, leaves sprayed with each formulation are placed onto petri plates, one leaf per plate. Five second instar larvae of *Spodoptera exigua* are placed onto each leaf. The plates are then incubated at 25°C for 5 days before scoring for percent mortality.

The results, as shown in Table 5, indicate that while FORAY™ 32B and 130-18-1 have the same potency, the same volume per acre, and similar deposit results, the percent mortality is better for 130-18-1 at 24 hours and 48 hours. Formulation 130-18-2 provided superior percent mortality results relative to Foray™ 32B even though the droplet density and percent coverage are low, and furthermore, the BIU per acre are estimated to be about 8 BIU per acre. The adjuvant formulations 130-18-1 and 130-18-2 with BIOBIT™ primary powder are better than BIOBIT™ FC when comparing the percent mortalities at 24 and 48 hours.

**Table 5**

| Evaluation Results of Adjuvant Formulations with BIOBIT Primary Powder | | | | | | | |
|---|---|---|---|---|---|---|---|
| FORMULATION | BIU PER ACRE | GALLONS PER ACRE | DROPS PER SQ. CM. | MVD (µm) | % AVG. COVERAGE | % MORTALITY 24 HOURS | % MORTALITY 48 HOURS |
| 130-18-1 | 16 | 0.5 | 139.75 | 243.73 | 1.58 | 88 | 68 |
| 130-18-2 | 16 | 0.33 | 67.75 | 244.25 | 0.75 | 76 | 43 |
| BIOBIT™ FC | 32 | 1.0 | 172.00 | 136 | 0.60 | 43 | 24 |
| FORAY™ 32B | 16 | 0.5 | 175.50 | 246.25 | 1.88 | 59 | 48 |
| UNTREATED | 0 | 0 | 2.10 | 93 | 0 | 2 | 5 |

## Claims

1. A formulation comprising a pesticide, an effective amount of a lignin, an effective amount of a sugar alcohol, and a protein.

2. The formulation of Claim 1 which comprises lignin in an amount of at least 2% w/w.

3. A formulation comprising a pesticide, lignin in an amount of at least 2% w/w and a sugar alcohol.

4. The formulation of Claim 2 or 3 which comprises a sugar alcohol in an amount of at least 4% w/w, preferably at least 8% w/w.

5. The formulation of Claim 2 or 3 which comprises lignin in an amount of at least 5-10% w/w, preferably at least 10-15% w/w.

6. The formulation of Claim 1 or 3 in which the pesticide is an insecticide, a fungicide, an acaricide, a herbicide or combinations thereof.

7. The formulation of Claim 6 in which the pesticide is a viral insecticide, a fungal insecticide, a *Bacillus*-based insecticide, or a chemical pesticide.

8. The formulation of Claim 7 in which the viral insecticide is a nuclear polyhedrosis virus or a granulosis virus.

9. The formulation of Claim 7 in which the *Bacillus*-based insecticide is obtained from a *Bacillus* selected from the group consisting of *Bacillus thuringiensis subsp. kurstaki*, *Bacillus thuringiensis subsp. aizawai*, *Bacillus* *thuringiensis subsp. israelensis*, *Bacillus thuringiensis subsp. tenebrionis*, *Bacillus sphaericus*, *Bacillus thuringiensis kurstaki/tenebrionis*, *Bacillus thuringiensis aizawai/kurstaki*, and *Bacillus thuringiensis kurstaki/kurstaki*.

10. The formulation of Claim 7 in which the chemical pesticide is selected from the group consisting of organophosphates, pyrazoles, pyrethroids, inorganic fluorine, insect growth regulators, pyroles, avermectin, and carbamates.

11. The formulation of Claim 3 which further comprises a deposition agent.

12. The formulation of Claim 11 in which the deposition agent is selected from the group consisting of a protein, a modified cellulose, botanicals, natural earths, and natural and synthetic clay.

13. The formulation of Claim 1 or 12 in which the protein is soy protein, potato protein, soy flour, potato flour, bone meal, fish meal, yeast extract or blood meal.

14. The formulation of Claim 2 or 3 which comprises at least 10-15% w/w lignin and at least 4% w/w of a sugar alcohol.

15. The formulation of Claim 14 which comprises at least 10-15% w/w lignin, at least 4% w/w sorbitol, and at least 5% w/w protein.

16. The formulation of Claim 1 or 3 in which the lignin is selected from the group consisting of a lignosulfonate or a salt thereof, an oxylignin or a salt thereof, a Kraft lignin, a high molecular weight lignin, and a lignin liquor.

17. The formulation of Claim 1 or 3 in which the sugar alcohol is sorbitol, mannitol or xylitol.

18. The formulation of Claim 1 in which the sugar alcohol is sorbitol.

19. The formulation of Claim 1 or 3 which further comprises a polyhydric alcohol in addition to the sugar alcohol.

20. The formulation of Claim 19 in which the polyhydric alcohol is propylene glycol.

21. A method for providing UV protection of pesticides in a pesticidal formulation comprising preparing a formulation containing an effective amount of a pesticide in combination with a UV protective effective amount of lignin, characterized in that said formulation furthermore contains a sugar alcohol to improve the UV protection of said pesticide.

22. A method for controlling or preventing pest infestation on plants which comprises applying to the plants a pesticidal composition containing a formulation comprising UV protective effective amounts of lignin and a sugar alcohol, in combination with a protein and furthermore in combination with an effective amount of a pesticide.

23. The method of Claim 21 or 22 in which said formulation comprises lignin in an amount of at least 2% w/w.

24. A method for controlling or preventing pest infestation on plants which comprises applying to the plants a pesticidal composition containing a formulation comprising lignin in an amount of at least 2% w/w and a sugar alcohol, in combination with an effective amount of a pesticide.

25. The method of Claim 23 or 24 in which said formulation comprises a sugar alcohol in an amount of at least 4% w/w, preferably at least 8% w/w.

26. The method of Claim 23 or 24 in which said formulation comprises lignin in an amount of at least 5-10% w/w, preferably at least 10-15% w/w.

27. The method of Claim 21, 22 or 24 in which the pesticide is an insecticide, a fungicide, an acaricide, a herbicide or combinations thereof.

28. The method of Claim 27 in which the pesticide is a viral insecticide, a fungal insecticide, a *Bacillus*-based insecticide, or a chemical pesticide.

29. The method of Claim 28 in which the viral insecticide is a nuclear polyhedrosis virus or a granulosis virus.

30. The method of Claim 28 in which the *Bacillus*-based insecticide is obtained from a *Bacillus* selected from the group consisting of *Bacillus thuringiensis subsp. kurstaki*, *Bacillus thuringiensis subsp. aizawai*, *Bacillus thuringiensis subsp. israelensis*, *Bacillus thuringiensis subsp. tenebrionis*, *Bacillus sphaericus*, *Bacillus thuringiensis kurstaki/tenebrionis*, *Bacillus thuringiensis aizawai/kurstaki*, and *Bacillus thuringiensis kurstaki/kurstaki*.

31. The method of Claim 28 in which the chemical pesticide is selected from the group consisting of organophosphates, pyrazoles, pyrethroids, inorganic fluorine, insect growth regulators, pyroles, avermectin, and carbamates.

32. The method of Claim 21 or 24 in which said formulation further comprises a deposition agent.

33. The method of Claim 32 in which the deposition agent is selected from the group consisting of a protein, a modified cellulose, botanicals, natural earths, and natural and synthetic clay.

34. The method of Claim 22 or 33 in which the protein is soy protein, potato protein, soy flour, potato flour, bone meal, fish meal, yeast extract or blood meal.

35. The method of Claim 23 or 24 in which said formulation comprises at least about 10-15% w/w lignin and at least about 4% w/w of a sugar alcohol.

36. The method of Claim 35 in which said formulation comprises at least 10-15% w/w lignin, at least 4% w/w sorbitol, and at least 5% w/w protein.

37. The method of Claim 21, 22 or 24 in which the lignin is selected from the group consisting of a lignosulfonate or a salt thereof, an oxylignin or a salt thereof, a Kraft lignin, a high molecular weight lignin, and a lignin liquor.

38. The method of Claim 21, 22 or 24 in which the sugar alcohol is sorbitol, mannitol or xylitol.

39. The method of Claim 22 in which the sugar alcohol is sorbitol.

40. The method of Claim 21, 22 or 24 in which said formulation further comprises a polyhydric alcohol in addition to the sugar alcohol.

41. The method of Claim 40 in which the polyhydric alcohol is propylene glycol.

## Patentansprüche

1. Formulierung, die ein Pestizid, eine wirksame Menge Lignin, eine wirksame Menge eines Zuckeralkohols und ein Protein umfaßt.

2. Formulierung nach Anspruch 1, die Lignin in einer Menge von wenigstens 2 Gewichtsprozent (Gewicht/Gewicht) umfaßt.

3. Formulierung, die ein Pestizid, Lignin in einer Menge von wenigstens 2 Gewichtsprozent (Gewicht/Gewicht) und einen Zuckeralkohol umfaßt.

4. Formulierung nach Anspruch 2 oder 3, die einen Zuckeralkohol in einer Menge von wenigstens 4 Gewichtsprozent (Gewicht/Gewicht), vorzugsweise wenigstens 8 Gewichtsprozent (Gewicht/Gewicht) umfaßt.

5. Formulierung nach Anspruch 2 oder 3, die Lignin in einer Menge von wenigstens 5-10 Gewichtsprozent (Gewicht/Gewicht), vorzugsweise wenigstens 10-15 Gewichtsprozent (Gewicht/Gewicht) umfaßt.

6. Formulierung nach Anspruch 1 oder 3, in der das Pestizid ein Insektizid, ein Fungizid, ein Acarizid, ein Herbizid oder eine Kombination davon ist.

7. Formulierung nach Anspruch 6, in der das Pestizid ein virales Insektizid, ein fungales Insektizid, ein auf *Bacillus* basierendes Insektizid oder ein chemisches Pestizid ist.

8. Formulierung nach Anspruch 7, in der das virale Insektizid ein nuklearer Polyhedrosis Virus oder ein Granulosis Virus ist.

9. Formulierung nach Anspruch 7, in der das auf *Bacillus* beruhende Insektizid aus einem *Bacillus* erhalten wird, der aus der Gruppe gewählt ist, die aus *Bacillus thuringiensis subsp*. *kurstaki, Bacillus thuringiensis subsp*. *aizawai, Bacillus thuringiensis subsp*. *israelensis, Bacillus thuringiensis subsp*. *tenebrionis, Bacillus sphaericus, Bacillus thuringiensis kurstaki/tenebrionis, Bacillus thuringiensis aizawai/kurstaki,* und *Bacillus thuringiensis kurstaki/kurstaki* besteht.

10. Formulierung nach Anspruch 7, in der das chemische Pestizid aus der Gruppe gewählt ist, die aus Organophosphaten, Pyrazolen, Pyrethroiden, anorganischem Fluor, Insektenwachstumsregulationsfaktoren, Pyrolen, Avermectin und Carbamaten besteht.

11. Formulierung nach Anspruch 3, die des weiteren ein Niederschlagungsmittel umfaßt.

12. Formulierung nach Anspruch 11, in der das Niederschlagungsmittel aus der Gruppe gewählt ist, die aus einem Protein, einer abgewandelten Zellulose, botanischen Stoffen, natürlichen Erden und natürlichen und synthetischen Tonerden besteht.

13. Formulierung nach Anspruch 1 oder 12, in der das Protein Sojaprotein, Kartoffelprotein, Sojamehl, Kartoffelmehl, Fleischmehl, Fischmehl, Hefeextrakt oder Blutmehl ist.

14. Formulierung nach Anspruch 2 oder 3, die wenigstens 10-15 Gewichtsprozent (Gewicht/Gewicht) Lignin und wenigstens 4 Gewichtsprozent (Gewicht/Gewicht) eines Zuckeralkohols umfaßt.

15. Formulierung nach Anspruch 14, die wenigstens 10-15 Gewichtsprozent (Gewicht/Gewicht) Lignin, wenigstens 4 Gewichtsprozent (Gewicht/Gewicht) Sorbitol und wenigstens 5 Gewichtsprozent (Gewicht/Gewicht) Protein umfaßt.

16. Formulierung nach Anspruch 1 oder 3, in der das Lignin aus der Gruppe gewählt ist, die aus einem Lignosulfonat oder einem Salz davon, einem Oxylignin oder einem Salz davon, einem Kraft Lignin, einem hochmolekulargewichtigen Lignin und einer Ligninflüssigkeit besteht.

17. Formulierung nach Anspruch 1 oder 3, in der der Zuckeralkohol Sorbitol, Mannitol oder Xylitol ist.

18. Formulierung nach Anspruch 1, in der der Zuckeralkohol Sorbitol ist.

19. Formulierung nach Anspruch 1 oder 3, die desweiteren einen Polyhydroxyalkohol zusätzlich zum Zuckeralkohol umfaßt.

20. Formulierung nach Anspruch 19, in der der Polyhydroxyalkohol Propylenglykol ist.

21. Verfahren zur Bereitstellung von UV-Schutz für Pestizide in einer pestiziden Formulierung, das die Herstellung einer Formulierung umfaßt, die eine wirksame Menge eines Pestizides in Kombination mit einer für den UV-Schutz effektiven Menge an Lignin umfaßt, dadurch gekennzeichnet, daß die Formulierung des weiteren einen Zuckeralkohol enthält, um den UV-Schutz des Pestizids zu verbessern.

22. Verfahren zur Bekämpfung oder Vorbeugung von Schädlingsbefall auf Pflanzen, das die Aufgabe einer Pestizidzusammensetzung auf die Pflanzen umfaßt, wobei die Zusammensetzung eine Formulierung enthält, die für den UV-Schutz effektive Mengen an Lignin umfassen und einen Zuckeralkohol in Kombination mit einem Protein und des weiteren in Kombination mit einer wirksamen Pestizidmenge.

23. Verfahren nach Anspruch 21 oder 22, in dem die Formulierung Lignin in einer Menge von wenigstens 2 Gewichtsprozent (Gewicht/Gewicht) umfaßt.

24. Verfahren zur Bekämpfung oder Vorbeugung von Schädlingsbefall auf Pflanzen, das die Aufgabe einer Pestizidzusammensetzung auf die Pflanzen umfaßt, wobei die Zusammensetzung eine Formulierung enthält, die Lignin in einer Menge von wenigstens 2 Gewichtsprozent (Gewicht/Gewicht) umfaßt und einen Zuckeralkohol, in Kombination mit einer wirksamen Pestizidmenge.

25. Verfahren nach Anspruch 23 oder 24 in dem die Formulierung einen Zuckeralkohol in einer Menge von wenigstens 4 Gewichtsprozent (Gewicht/Gewicht), vorzugsweise wenigstens 8 Gewichtsprozent (Gewicht/Gewicht) umfaßt.

26. Verfahren nach Anspruch 23 oder 24, in dem die Formulierung Lignin in einer Menge von wenigstens 5-10 Gewichtsprozent (Gewicht/Gewicht) umfaßt, vorzugsweise wenigstens 10-15 Gewichtsprozent (Gewicht/Gewicht).

27. Verfahren nach Anspruch 21, 22 oder 24, bei dem das Pestizid ein Insektizid, ein Fungizid, ein Acarizid, ein Herbizid oder eine Kombination davon ist.

28. Verfahren nach Anspruch 27, bei dem das Pestizid ein virales Insektizid, eine fungales Insektizid, ein auf *Bacillus* beruhendes Insektizid oder eines chemisches Pestizid ist.

29. Verfahren nach Anspruch 28, in dem das virale Insektizid ein nuklearer Polyhedrosis Virus oder ein Granulosis Virus ist.

30. Verfahren nach Anspruch 28, bei dem das auf *Bacillus* beruhende Insektizid aus einem *Bacillus* erhalten wird, der aus der Gruppe gewählt ist, die aus *Bacillus thuringiensis subsp*. *kurstaki, Bacillus thuringiensis subsp*. *aizawai, Bacillus thuringiensis subsp*. *israelensis, Bacillus thuringiensis subsp*. *tenebrionis, Bacillus sphaericus, Bacillus thuringiensis kurstaki/tenebrionis, Bacillus thuringiensis aizawai/kurstaki* und *Bacillus thuringiensis kurstaki/kurstaki* besteht.

31. Verfahren nach Anspruch 28, in dem das chemische Pestizid aus der Gruppe gewählt ist, die aus Organophosphaten, Pyrazolen, Pyrethroiden, anorganischem Fluor, Insektenwachstumsregulatoren, Pyrolen, Avermectin und Carbamaten besteht.

32. Verfahren nach Anspruch 21 oder 24, bei dem die Formulierung des weiteren ein Niederschlagungsmittel umfaßt.

33. Verfahren nach Anspruch 32, bei dem das Niederschlagungsmittel aus der Gruppe gewählt ist, die aus einem Protein, einer abgewandelten Zellulose, botanischen Stoffen, natrülichen Erden und natürlicher und synthetischer Tonerde besteht.

34. Verfahren nach Anspruch 22 oder 33 in dem das Protein Sojaprotein, Kartoffelprotein, Sojamehl, Kartoffelmehl, Knochenmehl, Fischmehl, Hefeextrakt oder Blutmehl ist.

35. Verfahren nach Anspruch 23 oder 24, in dem die Formulierung wenigstens etwa 10-15 Gewichtsprozent (Gewicht/Gewicht) Lignin und wenigstens etwa 4 Gewichtsprozent (Gewicht/Gewicht) eines Zuckeralkohols umfaßt.

36. Verfahren nach Anspruch 35, in dem die Formulierung wenigstens 10-15 Gewichtsprozent (Gewicht/Gewicht) Lignin, wenigstens 4 Gewichtsprozent (Gewicht/Gewicht) Sobitol und wenigsten 5 Gewichtsprozent (Gewicht/Gewicht) Protein umfaßt.

37. Verfahren nach Anspruch 21, 22 oder 24, bei dem das Lignin aus der Gruppe gewählt ist, die aus einem Lignosulfonat oder einem Salz davon, einem Oxylignin oder einem Salz davon, einem Kraft Lignin, einem hochmolekulargewichtigen Lignin und einer Ligninflüssigkeit besteht.

38. Verfahren nach Anspruch 21, 22 oder 24, bei dem der Zuckeralkohol Sorbitol, Mannitol oder Xylitol ist.

39. Verfahren nach Anspruch 22, in dem der Zuckeralkohol Sorbitol ist.

40. Verfahren nach Anspruch 21, 22 oder 24 in dem die Formulierung des weiteren einen Polyhydroxyalkohol zusätzlich zum Zuckeralkohol umfaßt.

41. Verfahren nach Anspruch 40, bei dem der Polyhydroxyalkohol Propylenglykol ist.

## Revendications

1. Formulation contenant un pesticide, une quantité efficace d'une lignine, une quantité efficace d'un alcool de sucre, et une protéine.

2. Formulation selon la revendication 1, contenant de la lignine en une quantité d'au moins 2 % m/m.

3. Formulation contenant un pesticide, de la lignine en une quantité d'au moins 2 % m/m, et un alcool de sucre.

4. Formulation selon la revendication 2 ou la revendication 3, contenant un alcool de sucre en une quantité d'au moins 4 % m/m, de préférence au moins 8 % m/m.

5. Formulation selon la revendication 2 ou la revendication 3, contenant de la lignine en une quantité d'au moins 5 à 10 % m/m, de préférence au moins 10 à 15 % m/m.

6. Formulation selon la revendication 1 ou la revendication 3, dans laquelle le pesticide est un insecticide, un fongicide, un acaricide, un herbicide, ou des combinaisons de ceux-ci.

7. Formulation selon la revendication 6, dans laquelle le pesticide est un insecticide viral, un insecticide fongique, un insecticide à base de *Bacillus*, ou un pesticide chimique.

8. Formulation selon la revendication 7, dans laquelle l'insecticide viral est un virus de polyédrose nucléaire ou un virus de granulose.

9. Formulation selon la revendication 7, dans laquelle l'insecticide à base de *Bacillus* est obtenu à partir d'un *Bacillus* choisi dans le groupe comprenant *Bacillus thuringiensis* var. *kurstaki*, *Bacillus thuringiensis* var. *aizawai*, *Bacillus thuringiensis* var. *israelensis*, *Bacillus thuringiensis* var. *tenebrionis*, *Bacillus sphaericus*, *Bacillus thuringiensis kurstaki/tenebrionis*, *Bacillus thuringiensis aizawai/kurstaki*, et *Bacillus thuringiensis kurstaki/kurstaki*.

10. Formulation selon la revendication 7, dans laquelle le pesticide chimique est choisi dans le groupe comprenant des organophosphates, pyrazoles, pyréthroïdes, fluor inorganique, régulateurs de la croissance des insectes, pyroles, avermectine, et carbamates.

11. Formulation selon la revendication 3, comprenant en plus un agent de déposition.

12. Formulation selon la revendication 11, dans laquelle l'agent de déposition est choisi dans le groupe comprenant une protéine, une cellulose modifiée, des éléments botaniques, des terres naturelles, et de l'argile naturelle et modifiée.

13. Formulation selon la revendication 1 ou la revendication 12, dans laquelle la protéine est une protéine de soja, une protéine de pomme de terre, de la farine de soja, de la fécule de pomme de terre, de la poudre d'os, de la poudre de poisson, de l'extrait de levure ou du sang séché.

14. Formulation selon la revendication 2 ou la revendication 3, comprenant au moins 10 à 15 % m/m de lignine et au moins 4 % m/m d'un alcool de sucre.

15. Formulation selon la revendication 14, comprenant au moins 10 à 15 % m/m de lignine, au moins 4 % m/m de sorbitol, et au moins 5 % m/m de protéine.

16. Formulation selon la revendication 1 ou la revendication 3, dans laquelle la lignine est choisie dans le groupe comprenant un lignosulfonate ou un sel de celui-ci, une oxylignine ou un sel de celle-ci, une lignine de kraft, une lignine à haut poids moléculaire, et une liqueur de lignine.

17. Formulation selon la revendication 1 ou la revendication 3, dans laquelle l'alcool de sucre est le sorbitol, le mannitol ou le xylitol.

18. Formulation selon la revendication 1, dans laquelle l'alcool de sucre est le sorbitol.

19. Formulation selon la revendication 1 ou la revendication 3, comprenant également un alcool polyhydrique en plus de l'alcool de sucre.

20. Formulation selon la revendication 19, dans laquelle l'alcool polyhydrique est le propylène glycol.

21. Procédé pour conférer une protection contre les UV à des pesticides dans une formulation pesticide, consistant à préparer une formulation contenant une quantité efficace d'un pesticide en combinaison avec une quantité de lignine efficace pour la protection contre les UV, caractérisé en ce que ladite formulation contient en plus un alcool de sucre afin d'améliorer la protection dudit pesticide contre les UV.

22. Procédé de lutte ou de prévention de l'infestation de végétaux par des nuisibles, consistant à déposer sur les végétaux une composition pesticide contenant une formulation comprenant des quantités de lignine et d'un alcool de sucre efficaces pour la protection contre les UV, en combinaison avec une protéine et également en combinaison avec une quantité efficace d'un pesticide.

23. Procédé selon la revendication 21 ou la revendication 22, dans lequel ladite formulation comprend de la lignine en une quantité d'au moins 2 % m/m.

24. Procédé de lutte ou de prévention de l'infestation de végétaux par des nuisibles, consistant à déposer sur les végétaux une composition pesticide contenant une formulation comprenant de la lignine en une quantité d'au moins 2 % m/m et un alcool de sucre, en combinaison avec une quantité efficace d'un pesticide.

25. Procédé selon la revendication 23 ou la revendication 24, dans lequel ladite formulation comprend un alcool de sucre en une quantité d'au moins 4 % m/m, de préférence au moins 8 % m/m.

26. Procédé selon la revendication 23 ou la revendication 24, dans lequel ladite formulation comprend de la lignine en une quantité d'au moins 5 à 10 % m/m, de préférence au moins 10 à 15 % m/m.

27. Procédé selon la revendication 21, la revendication 22 ou la revendication 24, dans lequel le pesticide est un insecticide, un fongicide, un acaricide, un herbicide, ou des combinaisons de ceux-ci.

28. Procédé selon la revendication 27, dans lequel le pesticide est un insecticide viral, un insecticide fongique, un insecticide à base de *Bacillus*, ou un pesticide chimique.

29. Procédé selon la revendication 28, dans lequel l'insecticide viral est un virus de polyédrose nucléaire ou un virus de granulose.

30. Procédé selon la revendication 28, dans lequel l'insecticide à base de *Bacillus* est obtenu à partir d'un *Bacillus* choisi dans le groupe comprenant *Bacillus thuringiensis* var. *kurstaki*, *Bacillus thuringiensis* var. *aizawai*, *Bacillus thuringiensis* var. *israelensis*, *Bacillus thuringiensis* var. *tenebrionis*, *Bacillus sphaericus*, *Bacillus thuringiensis kurstaki/tenebrionis*, *Bacillus thuringiensis aizawai/kurstaki*, et *Bacillus thuringiensis kurstaki/kurstaki*.

31. Procédé selon la revendication 28, dans lequel le pesticide chimique est choisi dans le groupe comprenant des organophosphates, pyrazoles, pyréthroïdes, fluor inorganique, régulateurs de la croissance des insectes, pyroles, avermectine, et carbamates.

32. Procédé selon la revendication 21 ou la revendication 24, dans lequel ladite formulation comprend en plus un agent de déposition.

33. Procédé selon la revendication 32, dans lequel l'agent de déposition est choisi dans le groupe comprenant une protéine, une cellulose modifiée, des éléments botaniques, des terres naturelles, et de l'argile naturelle et modifiée.

34. Procédé selon la revendication 22 ou la revendication 33, la protéine est une protéine de soja, une protéine de pomme de terre, de la farine de soja, de la fécule de pomme de terre, de la poudre d'os, de la poudre de poisson, de l'extrait de levure ou du sang séché.

35. Procédé selon la revendication 23 ou la revendication 24, dans lequel ladite formulation comprend au moins environ 10 à 15 % m/m de lignine et au moins environ 4 % m/m d'un alcool de sucre.

36. Procédé selon la revendication 35, dans lequel ladite formulation comprend au moins 10 à 15 % m/m de lignine, au moins 4 % m/m de sorbitol, et au moins 5 % m/m de protéine.

37. Procédé selon la revendication 21, la revendication 22 ou la revendication 24, dans lequel la lignine est choisie dans le groupe comprenant un lignosulfonate ou un sel de celui-ci, une oxylignine ou un sel de celle-ci, une lignine de kraft, une lignine à haut poids moléculaire, et une liqueur de lignine.

38. Procédé selon la revendication 21, la revendication 22 ou la revendication 24, dans lequel l'alcool de sucre est le sorbitol, le mannitol ou le xylitol.

39. Procédé selon la revendication 22, dans lequel l'alcool de sucre est le sorbitol.

40. Procédé selon la revendication 21, la revendication 22 ou la revendication 24, dans lequel ladite formulation comprend également un alcool polyhydrique en plus de l'alcool de sucre.

41. procédé selon la revendication 40, dans lequel l'alcool polyhydrique est le propylène glycol.
